# EUROPEAN PATENT APPLICATION

(11) **EP 3 879 362 A1**
(43) Date of publication of application: **15.09.2021**
(21) Application number: 20162373.3
(22) Date of filing: 11.03.2020
(51) Int. Cl.: G05B 19/042

(54) **A METHOD FOR COMPUTER-IMPLEMENTED IDENTIFYING UNAUTHORIZED ACCESS TO A WIND FARM IT INFRASTRUCTURE**

(71) Applicant: Siemens Gamesa Renewable Energy A/S, 7330 Brande (DK)
(72) Inventor: Deilmann, Lennart, 22419 Hamburg (DE)
(74) Representative: Aspacher, Karl-Georg

(57) **Abstract**

The invention refers to a method for computer-implemented identifying an unauthorized access to a wind farm IT infrastructure (1) where the wind farm IT infrastructure (1) comprises a number of wind turbine processing units (111-113), a wind farm controlling unit (120), and a supervisory control and data acquisition system (130) as first network components. The first network components are communicable connected, via a router (140), to second network components outside the wind farm IT infrastructure (1). The second network components comprise a wind farm measuring device (201), a user station (202), and a grid operator station (203). At each time point of one or more time points during the operation of the wind farm IT infrastructure (1) the following steps are performed: As a first step, operational data (OD) of the wind farm IT infrastructure (1) are obtained, where the operational data (OD) comprises conditions of the first network components and/or information about the data flow between the first network components as well as between the first and the second network components. As a second step, an unauthorized access to the wind farm IT infrastructure (1) is determined by processing the operational data (OD) by a trained data driven model (MO), where the operational data (OD) is fed as a digital input to the trained data driven model (MO). The trained data driven model (MO) provides an indication about an unauthorized access (UACC) as a digital output. The unauthorized access is characterized by a predetermined deviation of the obtained operational data (OD) from expected operational data (OD) with respect to operational data (OD) characteristics.

## Description

The invention refers to a method and an apparatus for computer-implemented identifying unauthorized access to a wind farm IT infrastructure.

Wind farms comprise of a plurality of wind turbines. For processing measurement values received from wind sensors (i.e. anemometers) to estimate a wind direction, and providing control commands for adjusting, among others, a yaw angle or pitch angle, each wind turbine comprises a processing unit. Besides the processing unit, each wind turbine comprises a communication device being communicable connected to an IT infrastructure of the wind farm.

The wind farm IT infrastructure consists of the processing units of the plurality of wind turbines, a wind farm controlling unit and a supervisory control and data acquisition system, known as SCADA system. The SCADA system is adapted to monitor and store operational data of the plurality of wind turbines as well as environmental parameters, such as wind speed, wind direction and so on, provided by a wind farm measuring device. The operational data may be requested from the plurality of wind turbines by the SCADA system. Alternatively, the operational data may be transmitted from the plurality of wind turbines to the SCADA system. The wind farm controlling unit is adapted to monitor operation of the plurality of wind turbines and to transmit control commands to them. The control commands are generated by the wind farm controlling unit or received from an external user station and/or a grid operator station.

Nowadays, wind farms have reached a size where they can be classified as a Critical National Infrastructure (CNI). Therefore, intrusion into the IT infrastructure of a wind farm by unauthorized parties, such as hackers, can cause huge impact on the grid network the wind farm is connected to. In times of cyber war cutting of a wind farm classified as a CNI is non-destructive and has the same impact as total destruction. In order to prevent any negative impact on the wind farm, identification and response to a cyber threat is required.

As wind farms are unmanned, a response to an intrusion can only be initiated after an alarm has been triggered to a supervisor station of a control center. The main issue is that software incidents are difficult to detect, especially if known software security solutions have already been bypassed. A need for fast identification of a cyber threat and response to the threat on the fly is necessary in order to limit the damage to the wind farm.

Cyber security systems often are organized on a corporate level. Threats to an IT infrastructure are analyzed and solutions are developed to match the understanding of the threat. Often, there are two main security systems shortfalls: A first solution is a rule-based security system which considers known threats. The second solution is scalability of a cyber security system which means that the organization cannot move at the same pace as cyber criminals change their strategy in order to access a system.

To detect hacker intrusions, honeypots or honeynets, hardened routers, network firewalls, web application firewalls and so on are used as common technologies. These technologies focus on baiting a hacker while these are scanning the system for weaknesses. Honeypots are non-productive systems, where for every access the honey pot can be considered as an unauthorized intrusion. The disadvantages of honeypots are that they can be hacked as well and, as part of the IT infrastructure, they can be used for further attacks on the IT infrastructure. Therefore, honeypots need to be protected against unauthorized access in the same manner as applications on the protective systems.

It is therefore an object of the present invention to provide an easy method in order to detect an unauthorized access to a wind farm IT infrastructure.

This object is solved by the independent patent claims. Preferred embodiments of the invention are defined in the dependent claims.

The invention provides a method for computer-implemented identifying an unauthorized access to a wind farm IT infrastructure. The wind farm IT infrastructure comprises a number of wind turbine processing units, a wind farm controlling unit, and a supervisory control and data acquisition system as first network components.

The number of wind turbine processing units is assigned to a corresponding number of wind turbines of the wind farm, i.e. each wind turbine consists of a respective processing unit. The term "processing unit" refers to both, a processor and a communication device for exchanging data with another communication device. In other words, each wind turbine processing unit is adapted to receive data, for example measured values captured by a measuring device or the farm controlling unit, and/or to transmit data to the wind farm controlling unit and/or the SCADA system as well as to control the wind turbine. The term "wind farm controlling unit" refers to a controlling unit which is adapted to transmit control commands to at least some of the plurality of wind turbines of the wind farm, in order to operate the windfarm in a specific way, e.g. to produce a demand power. The term "supervisory control and data acquisition system" refers to a processor or a processor system which is adapted to gather and store operational data of the number of wind turbines of the wind farm. The stored operational data can be used for further investigation or development of control strategies. The supervisory control and data acquisition system is also known as SCADA system.

The first network components are communicable connected, via a router, to second network components outside the wind farm IT infrastructure, where the second network components comprise a wind farm measuring device, a user station, and a grid operator station. According to the present invention, the router can be regarded to be a first network component or a second network component or an edge network component. The second network components are connected, by way of example, via internet to the router for transmitting and/or receiving control commands or operational data. The communication link between two (first and/or second) network components may be wired or wireless.

The user station is typically used to transmit control commands to the controlling unit. The controlling unit is adapted to either forward the control commands without altering them or to create adapted control commands. The user station control commands generated by a user (e.g. an operator) or a software may be such to control the wind farm as whole, e.g. with respect to a demand power, or to control respective wind turbines of the wind farm, e.g. with respect to a power to be produced by them at a specific point of time or to switch them on or off. The grid operator station refers to a computer or a processing unit for processing operational data of the wind farm, such as produced power.

According to the method of the invention, the following steps i) and ii) are performed at each time point of one or more time points during the operation of the wind farm IT infrastructure.

In step i), operational data of the wind farm IT infrastructure are obtained. In the following the term "obtaining" means that the operational data are received by a processor implementing the method of the invention. Operational data are current operational data acquired by sensors and/or monitoring units installed at or throughout the wind farm IT infrastructure. The operational data comprises conditions of the first network components and/or information about the data flow between the first network components as well as between the first and the second network components, and vice versa.

In step ii), an unauthorized access to the farm IT infrastructure is determined by processing the operational data by a trained data driven model, where the operational data is fed as a digital input to the trained data driven model and the trained data driven model provides an indication about an unauthorized access as a digital output. The unauthorized access is characterized by a predetermined deviation of the obtained operational data from expected operational data with respect to operational data characteristics.

The method of the invention provides an easy and straight forward method for determining an unauthorized access to a wind farm IT infrastructure based on operational data which is obtained on the fly. To do so, a trained data driven model is used. The model is trained by training data comprising a plurality of operational data of the wind farm IT infrastructure which has been obtained and acquired in the past together with the information about a normal or an unnormal condition of at least one component or data flow between first network components as well as between first and second network components.

Any known data driven model being learnt by machine learning may be used in the method according to the invention. In a particularly preferred embodiment, the trained data driven model is a neural network, preferably a convolutional neural network. Alternatively, a cognitive algorithm or trained data driven models which are based on pattern recognition or based on artificial intelligence may also be implemented in the method of the invention.

In a preferred embodiment of the invention, the operational data characteristics comprise at least one of patterns (i.e. the presence of abnormal states and/or the absence of normal states), state variables, responses or load of the first and/or second network components, user access to one of the first and/or second network components, data downloads resulting in a data flow between the first network components and/or the first and the second network components or user geographical location, i.e. an access from a location which is not identical to the location of the user station and/or the grid operator station.

In a further preferred embodiment of the invention, an information based on the unauthorized access is output via a user interface. E.g., the information about the unauthorized access to a specific first component of the wind farm IT infrastructure itself may be output via the user interface. Alternatively or additionally, a warning may be provided via the user interface in case that an unauthorized access has been detected. Thus, a human operator is informed about an unexpected deviation or an intended deviation of the obtained operational data from expected operational data with respect to operational data characteristics. Preferably, the user interface comprises a visual user interface, but it may also comprise a user interface of another type (e.g. an acoustic user interface).

In another particularly preferred embodiment, the operational data is obtained by a digital condition monitoring system. Alternatively or additionally, the operational data is obtained by one or more sensors provided within the wind farm IT infrastructure. Condition monitoring systems are known from vibration monitoring where errors on mechanical devices, e.g. on the drive train, are predicted via the analysis of the vibration data recorded by the vibration condition monitoring system. The vibration condition monitoring system is based on a frequency analysis to determine whether a deviation is present from a boundary curve where, when the measured frequency exceeds a boundary curve, a warning is generated.

Besides the above method, the invention refers to an apparatus for computer-implemented identifying an unauthorized access to a wind farm IT infrastructure, where the apparatus is configured to perform the method according to the invention or one or more preferred embodiments of the method according to the invention.

Moreover, the invention refers to a computer program product with a program code, which is stored on a non-transitory machine readable carrier, for carrying out the method according to the invention or one or more preferred embodiments thereof when the program code is executed on a computer.

Furthermore, the invention refers to a computer program with a program code for carrying out the method according to the invention or one or more preferred embodiments thereof when the program code is executed on a computer.

An embodiment of the invention will now be described in detail with respect to the accompanying drawings.
- Fig. 1: is a schematic illustration of a wind farm IT infrastructure comprising first network components within a wind farm and second network components outside the wind farm being communicable connected, via a router, to the first network components; and
- Fig. 2: shows a schematic illustration of an apparatus for performing an embodiment of the invention.

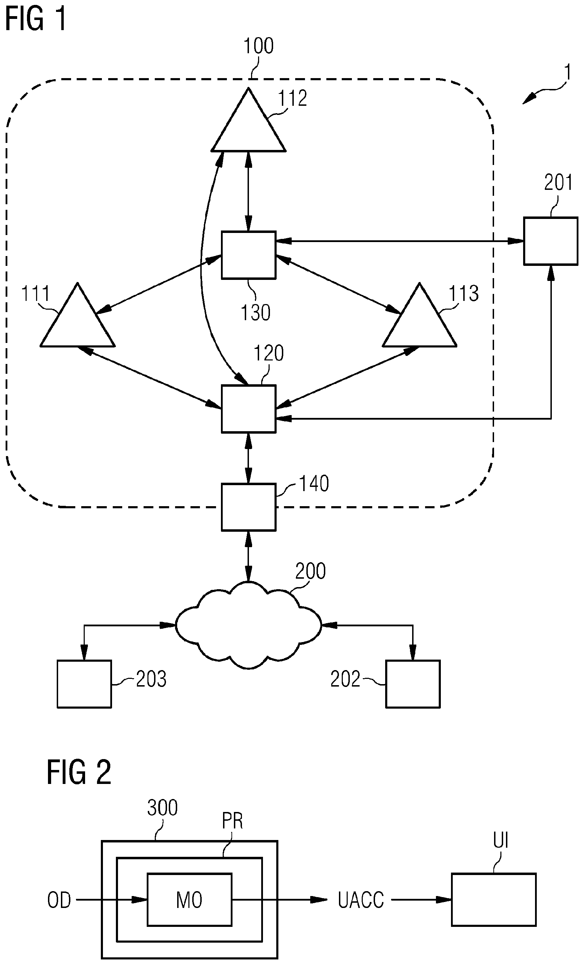

Fig. 1 shows a wind farm IT infrastructure 1. The wind farm IT infrastructure 1 comprises a number of wind turbine processing units 111, 112, 113, a wind farm controlling unit 120, and a supervisory control and data acquisition system 130, also referred to as SCADA system 130. The number of wind turbine processing units 111, 112, 113 corresponds to the number of wind turbines within the wind farm 100. By way of example only, the wind farm 100 according to the present embodiment consists of three wind turbines which are not shown explicitly.

The wind turbine processing units 111, 112, 113 are adapted to process data and to exchange data via a not shown communication device of the respective processing unit with one of the other first network components. Hence, the wind turbine processing units 111, 112, 113 are adapted to receive control command received from the wind farm controlling unit 120 and/or measured values captured by measuring devices of the wind turbines and/or external measuring devices. In addition, the wind turbine processing units 111, 112, 113 are adapted to transmit data to the controlling unit 120 and/or the SCADA system 130.

The SCADA system 130 is adapted to gather operational data of the respective wind turbines and received by the wind turbine processing units 111, 112, 113 and store them in a not shown data storage.

The wind farm controlling unit 120 is adapted to transmit control data to the wind turbine processing units to control the associated wind turbines with respect to a power to be generated, to switch them on or off or to upload software updates and so on.

The first network components are communicable connected, via a router 140, to second network components outside the wind farm IT infrastructure, where the second network components comprise a wind farm measuring device 201, a user station 202, and a grid operator station 203.

The wind farm measuring device 201 provides weather data, for example wind speed, wind direction, temperature, air pressure and so on.

The user station 202 is used to generate control commands suitable for controlling the respective wind turbines. Control commands are transmitted, via the router 140, to the wind farm controlling unit 120 which transmits them either without altering them or as adapted control commands to the respective wind turbine processing units 111, 112, 113.

In a normal condition, the individual first network components of the wind farm IT infrastructure 1 cause a specific amount of traffic in the wind farm network which may be different for different days and/or time of the day and/or dependent on environmental conditions. For example, a user who accesses the wind farm controlling unit 120 from the user station 202 causes a specific amount of traffic within the wind farm IT infrastructure 1. In particular, the data flow between the user station 201 and the wind farm controlling unit 120 may be increased and/or the processor load of the wind farm controlling unit 120 may be increased and/or access time to a memory of the wind farm controlling unit 120 may be increased.

In a normal condition, the individual network components of the wind farm IT infrastructure 1 as well as users accessing the wind farm IT infrastructure 1 from outside cause a different network traffic and/or load of respective network components compared to the case where an unauthorized access to the wind farm IT infrastructure takes place. The method as described in the following provides an easy method to identify an unauthorized access to the wind farm IT infrastructure, i.e. an unauthorized access to one or more of the first network components.

To do so, the wind farm IT infrastructure 1 is equipped with a not shown condition monitoring system and/or sensors and/or monitoring means to monitor operational data OD of the first network components of the wind farm IT infrastructure 1 (preferably including the router 140). The operational data OD comprises conditions of the first network components and/or an information about the data flow between the first network components as well as between one of the first network components and one or more of the second network components, and vice versa.

The operational data OD can be characterized by operational data characteristics consisting of patterns, state variables, responses or load of the first and/or second network components, user access, data downloads, or user geographical location of an access from outside the wind farm IT infrastructure. The respective operational data OD are captured by a condition monitoring system and/or one or more sensors installed within the wind farm IT infrastructure 1. Immediately after having the operational data OD captured, they are transferred by a suitable communication link to a controller 300 of the wind farm 100 (see Fig. 2). The controller 300 comprises a processor PR implementing a trained data driven model MO receiving the operational data OD as digital input and providing an information about an unauthorized access UACC as a digital output.

In the embodiment described herein, the trained data driven model MO may be based on a neural network, such as convolutional neural network. However, a cognitive algorithm, a trained data driven model which is based on pattern recognition or based on artificial intelligence may be used as well.

In the embodiment of Fig. 1, the indication about an unauthorized access UACC produced as an output of the model MO results in an output of a user interface UI which is only shown schematically. Preferably, the user interface UI comprises a display. The user interface UI provides information for a human operator for further investigation of the captured operational data. The output based on the indication about an unauthorized access UACC may be an information about the unauthorized access itself so that the operator is informed about an intrusion into the wind farm IT infrastructure 1. Alternatively or additionally, the output may comprise an information which of the first network components has been accessed unauthorized. The indication about an unauthorized access may also result in counter measures such as a shutdown of the router 140 and/or a wind turbine.

The method as described above enables identifying an unauthorized access to the wind farm IT infrastructure by consistently analyzing data within and from/to the wind farm IT infrastructure in the search of patterns and state variables or user access, data downloads, and user geographical location on the fly. The method is based on a learning algorithm in order to improve identification quality and speed. The data driven model MO is capable of interpreting the traffic within the wind farm IT infrastructure as well as loads of specific network components in order to differentiate what additional traffic and/or load of specific first network components is caused by a component or a user or a sensor or by an unauthorized access from a cybercriminal. The additional traffic and/or load of one or more of the first network components is identified and classified.

The trained data driven model MO is based on the analysis of the wind farm IT infrastructure data and the first network components dealing with one or a combination of the following situations: detecting threats of unauthorized access; analysis of cognitive system/algorithm support patterns; monitoring of network routers and switches; monitoring of network ports for anomalies; analysis of network traffic for anomalies; analysis of wind farm third party system data, such as shadow management or ice sensors, for anomalies; analysis of honeypots or honeynets for anomalies; analysis of locked data for anomalies; analysis of middleware communication, i.e. communication from and to the SCADA system 130, for anomalies; analyzing southbound wind farm internal communication for anomalies; analysis of northbound wind farm external communication, e.g. with a grid operator or energy trader, utility, service provider; analysis of user login information including geographical information of the user.

The trained data driven model is based on the explicit analysis of system responses and conditions of the first network components of the wind farm IT infrastructure and/or the second network components outside the wind farm IT infrastructure to external and/or internal stimulus. Here, the normal range of system responses and conditions can be determined first. Responses and state variables or state data will develop specific pattern during improper use. Incidents according to the deviation between a normal range and a deviation from a normal range can be made via comparison, where optionally a specific confidence level is identifiable. When an indication about an unauthorized access is detected, precautionary measures can be taken to defend against the threats.

In order to describe a normal range of system responses and conditions of the wind farm IT infrastructure data is recorded at the first network components and during normal operations: router for external data traffic, switches within the wind farm IT infrastructure, third party systems, user access to the wind farm IT infrastructure components, such as routers, switches, software applications, third party systems, event handling systems of middleware, and the processing units of the wind turbines.

By continuous exposure of the processor 300 to threats, the processor is able to identify and classify threats on the fly. The processor 300 is able to indicate the origin of the vulnerability and allow retraction of the vulnerability. After identifying the threats, an alarm is triggered on the user interface for information purposes.

The method as described above has the advantage that its response is much faster towards cyber-attacks, especially as wind farm are unmanned and therefore more vulnerable towards attacks from inside and outside the wind farm. The method is able to identify threats and classify them, to provide fast response capabilities to cyber-attacks, to identify anomalies on the wind farm IT infrastructure as well as an unauthorized access to the wind farm IT infrastructure, and to support automated patching of identified vulnerabilities.

## Claims

1. A method for computer-implemented identifying an unauthorized access to a wind farm IT infrastructure (1) where the wind farm IT infrastructure (1) comprises a number of wind turbine processing units (111-113), a wind farm controlling unit (120), and a supervisory control and data acquisition system (130) as first network components, the first network components being communicable connected, via a router (140), to second network components outside the wind farm IT infrastructure (1), where the second network components comprise a wind farm measuring device (201), a user station (202), and a grid operator station (203),
wherein at each time point of one or more time points during the operation of the wind farm IT infrastructure (1) the following steps are performed:
i) obtaining operational data (OD) of the wind farm IT infrastructure (1), where the operational data (OD) comprises conditions of the first network components and/or information about the data flow between the first network components as well as between the first and the second network components;
ii) determining an unauthorized access to the wind farm IT infrastructure (1) by processing the operational data (OD) by a trained data driven model (MO), where the operational data (OD) is fed as a digital input to the trained data driven model (MO) and the trained data driven model (MO) provides an indication about an unauthorized access as a digital output, the unauthorized access being **characterized by** a predetermined deviation of the obtained operational data (OD) from expected operational data (OD) with respect to operational data (OD) characteristics.

2. The method according to claim 1, wherein the operational data (OD) characteristics comprise at least one of
- patterns,
- state variables,
- responses or load of the first and/or second network components,
- user access,
- data downloads,
- user geographical location
in the obtained operational data (OD).

3. The method according to claim 1 or 2, wherein the trained data driven model (MO) is
- a neural network, preferably a Convolutional Neural Network,
- a cognitive algorithm,
- based on pattern recognition,
- based on artificial intelligence.

4. The method according to one of the preceding claims, wherein an information based on the unauthorized access is output via a user interface (UI).

5. The method according to one of the preceding claims, wherein the operational data (OD) is obtained by a digital condition monitoring system.

6. The method according to one of the preceding claims, wherein the operational data (OD) is obtained by a sensor.

7. An apparatus for computer-implemented identifying an unauthorized access to a wind farm IT infrastructure (1) where the wind farm IT infrastructure (1) comprises a number of wind turbine processing units (111-113), a wind farm controlling unit (120), and a supervisory control and data acquisition system (130) as first network components, the first network components being communicable connected, via a router (140), to second network components outside the wind farm IT infrastructure (1), where the second network components comprise a wind farm measuring device (201), a user station (202), and a grid operator station (203),
wherein the apparatus (300) comprises a condition monitoring system configured to perform at each time point of one or more time points during the operation of the wind farm the following steps:
i) obtaining operational data (OD) of the wind farm IT infrastructure (1), where the operational data (OD) comprises conditions of the first network components and/or information about the data flow between the first network components as well as between the first and the second network components, and vice versa;
ii) determining an unauthorized access to the wind farm IT infrastructure (1) by processing the operational data (OD) by a trained data driven model (MO), where the operational data (OD) is fed as a digital input to the trained data driven model (MO) and the trained data driven model (MO) provides an indication about an unauthorized access as a digital output, the unauthorized access being **characterized by** a predetermined deviation of the obtained operational data (OD) from expected operational data (OD) with respect to operational data (OD) characteristics.

8. The apparatus according to claim 7, wherein the apparatus (300) is configured to perform a method according to one of claims 2 to 6.

9. A wind farm comprising a wind farm IT infrastructure (1), where the wind farm IT infrastructure (1) comprises a number of wind turbine processing units (111-113), a wind farm controlling unit (120), and a supervisory control and data acquisition system (130) as first network components, the first network components being communicable connected, via a router (140), to second network components outside the wind farm IT infrastructure (1), where the second network components comprise a wind farm measuring device (201), a user station (202), and a grid operator station (203), wherein the wind farm comprises an apparatus (300) according to claim 7 or 8.

10. A computer program product with program code, which is stored on a non-transitory machine-readable carrier, for carrying out a method according to one of claims 1 to 6 when the program code is executed on a computer.
